Europäisches Patentamt

European Patent Office

Office européen des brevets

(11) Publication number: **0 443 768 A2**

# EUROPEAN PATENT APPLICATION

(21) Application number: **91301149.0**

(22) Date of filing: **13.02.91**

(51) Int. Cl.⁵: **G06F 9/44**, G06F 9/46

(30) Priority: **22.02.90 US 483478**

(43) Date of publication of application:
**28.08.91 Bulletin 91/35**

(84) Designated Contracting States:
**DE ES FR GB IT**

(71) Applicant: **Hewlett-Packard Company**
**Mail Stop 20 B-O, 3000 Hanover Street**
**Palo Alto, California 94304(US)**

(72) Inventor: **Bailey, Randy L.**
**4616 Chippendale Drive**
**Fort Collins, Colorado 80526(US)**

Inventor: **Wolber, Susan G.**
**3004 Southmoor Court**
**Fort Collins, Colorado 80526(US)**
Inventor: **Beethe, Douglas C.**
**1602 Caddoa**
**Loveland, Colorado 80538(US)**
Inventor: **Williams, Roy H.**
**2820 Farisita Drive**
**Loveland, Colorado 80538(US)**

(74) Representative: **Colgan, Stephen James et al**
**CARPMAELS & RANSFORD 43 Bloomsbury**
**Square**
**London WC1A 2RA(GB)**

(54) **Programming escape from an iconic system.**

(57) Disclosed is an iconic programming system or process (122) which provides for an "escape" -- that is, transfer of program control -- either to a non-iconic program within the same process as the iconic programming system (122) or to a non-iconic program located in a separate process (124) within the same operating system environment. When transferring control to a non-iconic program within the same process (122), the iconic programming system first loads the non-iconic program (402) into its own memory space, and it may allow the user to edit the non-iconic program (404). After loading the non-iconic program (402), the iconic programming system creates an input to the non-iconic program for each of the program's parameters (406). The iconic programming system then starts the non-iconic program (411), and converts any input data available for each of the input parameters into a data type and size acceptable to the non-iconic program (410). It then passes the parameter data to the non-iconic program, and allows the non-iconic program to continue execution. When data is received from the non-iconic program (416), the iconic programming system converts this data into a data type and size acceptable to the next icon in the iconic programming system network. It then passes the data to the next icon in the network (418) and continues processing. If the escape icon is for a program in a different process within the same operating system environment, the iconic programming system first creates a child process (804) and passes a command to the child process that identifies the non-iconic program for execution (808). The iconic programming system then converts input and output data in the manner described above (810). At the user's option, the iconic programming system will wait until the non-iconic program is complete (814), or it will process program data as that data is produced by the non-iconic program and allow the non-iconic program to remain active.

EP 0 443 768 A2

ENTER

CONNECT TO
OTHER NETWORK
NODE — 1002

PASS COMMAND
TO OTHER
NETWORK NODE — 1004

CONVERT ICON
INPUT TO DATA
FORMAT
ACCEPTABLE TO
NETWORK NODE — 1006

PASS CONVERTED
DATA TO THE
NETWORK NODE — 1008

N — NODE COMPLETE ? — 1010 — Y

CONVERT
RETURNED DATA
TO TYPE AND
SIZE ACCEPTABLE
TO NEXT ICON — 1012

PASS DATA TO
NEXT ICON — 1014

EXIT

FIG 10

2

## FIELD OF THE INVENTION

This invention relates to computer systems and more particularly to Iconic Programming Systems. Even more particularly, the invention relates to transferring programming control from an iconic programming environment to a conventional, non-iconic programming environment.

## BACKGROUND OF THE INVENTION

An iconic programming system is a "programming-less" environment where programming is done by connecting graphical images of tools (icons), together with connecting lines, to create an iconic network which represents a software program. The iconic programming system may be used in research and development test environments, where several different electronic instruments are connected to test a system or device. Programming such a system requires instructions to cause the various instruments to perform desired functions in order to operate as a system.

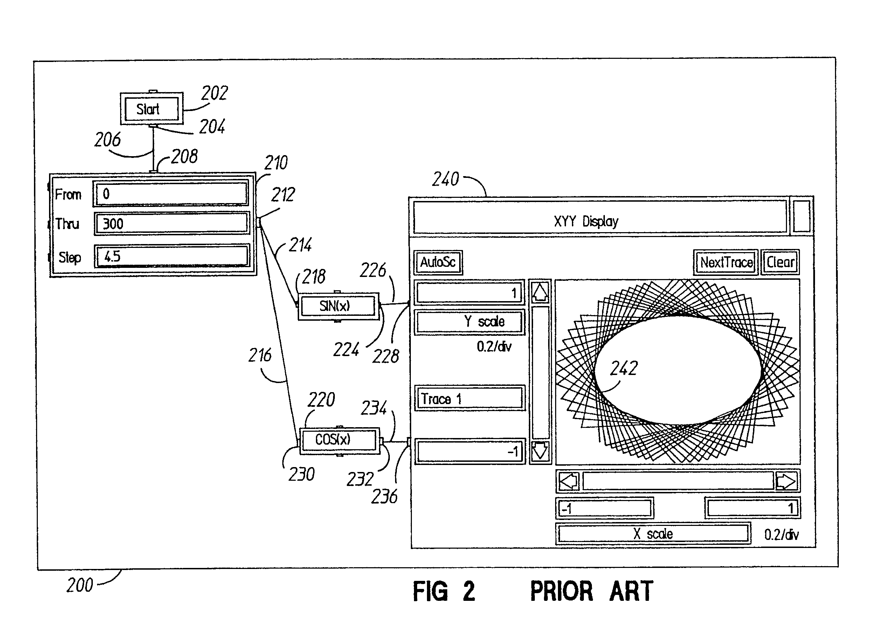

When an iconic programming system is used, each instrument will be represented by a graphical icon, also called a graphical object, and the connections between the instruments are represented by lines between the graphical images. In addition to graphical icons representing instruments in such a system, graphical icons are provided for programming functions, for example looping, IF-THEN statements, etc. By combining instrument and programming icons, a user can create an iconic network involving the programmed operation of several instruments. An example of a simple iconic network is shown in Fig. 2, described below.

Iconic systems are designed to relieve the user of having to program in a traditional programming language to accomplish an operation. Because these systems are designed for a user who is not a professional programmer, they provide only very simple programming functions, such as loops, and do not provide a way for programming a complex operation. Also, because the user of the system is unaware of the specific data types and formats of data being exchanged between the instruments, or other graphical objects within the system, traditional programming would not be possible in prior art iconic systems.

A user of an iconic programming system may have a need to include a more complex program within an iconic network. Such a program may require programming facilities that are beyond the scope of the iconic programming environment. When this type of problem arises, prior art iconic systems are unable to provide the facilities needed, because they cannot transfer control to a conventional program or a conventional programming environment.

Often a user will have a preexisting program which will perform a required function that the user needs. The user may not be able to modify this program to accept data in any arbitrary form, therefore the iconic system must be able to adapt itself to provide data in a predefined format. Prior art iconic systems made no provision for such programs or such data conversion.

There is a need in the art then for an iconic programming system that provides a way to use conventional, non-iconic programming within an iconic programming system. There is also a need for such a system that provides a way to transfer control and data to and from an existing program within a different process in the same machine. There is a need for such a system that allows the user to specify the data type and size being sent to the non-iconic program and to specify the data type and size of the data being returned. There is a further need for such a system that provides for transfer of control and data to a plurality of non-iconic programs within the same iconic network.

## SUMMARY OF THE INVENTION

It is an aspect of the present invention to provide a means to use conventional, non-iconic programming within an iconic programming system.

It is another aspect of the invention to provide an escape object that allows an iconic programming system to escape from the iconic programming environment into a non-iconic programming environment, within the same process.

Yet another aspect of the invention is to allow an iconic programming system running in one process to escape to a non-iconic program running in a second process within the same machine and operating system.

Another aspect is to allow a user of the iconic programming system to specify data type and size constraints for the data passed to and returned from the non-iconic program.

Another aspect is to concatenate data from all inputs to the escape object and pass this data to the non-iconic program as a single input.

A further aspect is to allow each input to the escape object to be accessed as a separate parameter by the non-iconic program.

A further aspect is to allow multiple escapes to different non-iconic programs within the same iconic programming system.

A further aspect is to allow escapes to multiple copies of the same non-iconic program within the same iconic network.

A further aspect is to allow an escape to a dynamically created non-iconic program within the iconic network.

A still further aspect is to allow a non-iconic program statement within an iconic escape object to send output to an icon outside of the escape object and cause that outside icon to complete its function before continuing with the next non-iconic program statement.

The above and other aspects of the invention are accomplished in an iconic programming system or process which provides for an "escape" -- that is, transfer of program control -- either to a non-iconic program within the same process as the iconic programming system process, or to a non-iconic program located in a separate process within the same operating system. This escape is represented in the iconic network as an escape icon, also called an escape object.

When transferring control to a non-iconic program within the same process, the iconic programming system first loads the non-iconic program into an escape object within its own memory space. Depending upon the language used for the non-iconic program, the iconic process may allow the user to edit source code of the non-iconic program. After loading and optionally editing the non-iconic program, the iconic programming system creates an input to the iconic escape object for each of the program parameters. When the iconic object is triggered (executed), the iconic programming system converts any input data available for each of the inputs into a data type and size acceptable to the corresponding parameter of the non-iconic program. The iconic programming system then passes the parameter data to the non-iconic program and allows the non-iconic program to continue execution. Under normal execution, the iconic escape object will wait for the non-iconic program to complete execution before updating any iconic data outputs and continuing execution of the iconic program. The non-iconic program may, however, include a statement which causes one or more outputs of the iconic escape object to be updated with new data values when the non-iconic statement is executed. When this type of statement is encountered during execution of the non-iconic program, the iconic network graphical symbols connected to these outputs are executed before continuing with the next non-iconic program statement. In either case, when data is received from the non-iconic program, the iconic programming system converts this data into a data type and size acceptable to the next icon in the iconic network. It then passes the data to the next icon in the network and continues processing.

If the escape icon is for a non-iconic program in a different process within the same operating system environment, the iconic programming system first creates a command, which will be passed to the second process, to define the name of the non-iconic program to be executed. It then creates the second process, often called a child process. It starts a shell program, which is used to run other programs within the child process, and passes the command to that shell program. The iconic process then converts data which is being passed to the escape icon into a data type and size acceptable to the child process. For example, often the data type acceptable to a child process is simply an ASCII string of characters or a binary stream of bits. This converted data is then passed to the child process. The iconic programming system, at the user's option, may wait for the child process to complete execution, or it may continue execution after all required data has been received from the child process, allowing the child process to remain active. When data output is received from the child process, the data is converted to a data type and size acceptable to the next icon within the iconic network. This converted data is then passed to the next icon for processing.

When the escape is to a non-iconic program in a separate operating environment, the iconic programming system first creates a network link to a process in the other environment. In creating this network link, the iconic programming system specifies the non-iconic program to be executed in the other environment. After the network link is established, the iconic programming system converts input data into a data type and size which is acceptable to the non-iconic program running in the other environment. It then passes this converted data through the network link to the non-iconic program. After receiving output data from the other environment through the network link, the data is converted to a data type and size acceptable to the next icon in the iconic network. This converted data is then passed along to the next icon in the iconic programming system. As with the above described methods, the user may wait for termination of the other process before continuing within the iconic programming system, or the user may process each data item as it is received from the other environment, allowing the process in the other environment to remain active.

BRIEF DESCRIPTION OF THE DRAWINGS

The above and other aspects, features, and advantages of the invention will be better understood by reading the following more particular description of the invention, presented in conjunction with the following drawings, wherein:

Fig. 1     shows a block diagram of a computer system incorporating the present invention;

Fig. 2     shows a prior art iconic programming

Fig. 3    shows an escape to a BASIC program within the iconic process;

Fig. 4    is a flowchart of the method wherein the iconic process escapes to a program within the iconic process;

Fig. 5    shows two escapes to two programs within the iconic process;

Fig. 6    shows an escape to a program in a separate process within the same operating system environment;

Fig. 7    shows the program source code for the separate process of Fig. 6;

Fig. 8    is a flowchart of the method wherein the iconic process escapes to a program in a separate process within the same operating system environment;

Fig. 9    shows the escape of Fig. 6 wherein the user is allowed to specify the output data type and size; and

Fig. 10   is a flowchart of the method wherein the iconic process escapes to a program in a separate process in a separate machine and operating system environment.

## DESCRIPTION OF THE PREFERRED EMBODIMENT

The following description is of the best presently contemplated mode of carrying out the present invention. This description is not to be taken in a limiting sense but is made merely for the purpose of describing the general principles of the invention. The scope of the invention should be determined by referencing the appended claims.

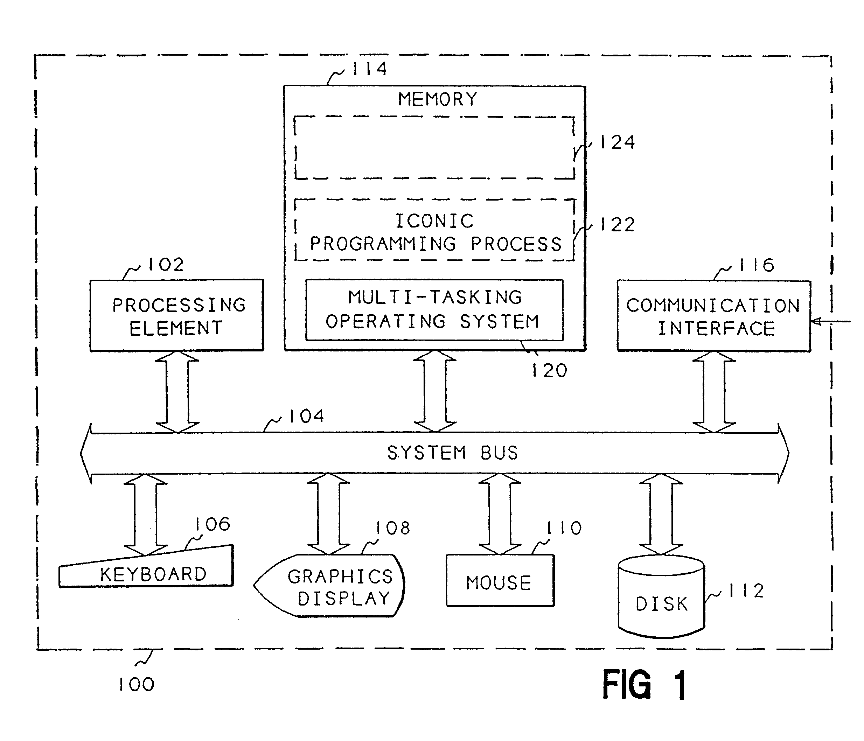

Fig. 1 shows a block diagram of a computer system incorporating the present invention. Referring now to Fig. 1, a computer system 100 contains a processing element 102 which connects to the other components of the system through a system bus 104. A keyboard 106 allows a user to input textual data to the system, and a mouse 110 allows a user to input graphical data to the system. A graphics display 108 allows the system to output text and graphical information to the user. A disk 112 is used by the system to store the software of the iconic programming system environment, as well as the user-defined iconic network. A communications interface 116 is used to create a communications network which allows the computer and iconic programming environment to communicate with other computers and other environments. This network allows the iconic program environment to "escape" to a program in a separate environment or machine. Memory 114 is used to contain the software and user data of the iconic programming environment. A multi-tasking operating system 120 can have a plurality of tasks, also called processes, here illustrated by task 122 and task 124. Task 122 is shown containing the iconic programming process of the present invention. Task 124 might be used for the escape to a separate process within the same operating system environment.

Fig. 2 shows a computer screen with several icons from a prior art iconic programming environment. Referring now to Fig. 2, a graphical screen display 200 is shown having a plurality of icons or graphical objects which represent the fundamental building blocks of iconic programs. A graphical object or icon can represent one of several things:

An input or output device, such as an instrument;

A mathematical expression or equation, or math-related input or output;

An input control, such as a dial, button, toggle, or slide;

An input, output, or single programming statement, such as DO, IF... THEN, WAIT, etc.;

Output display of data, such as a meter, waveform display, X-

Y display, etc.

A start icon 202 allows the user to start the operation of an iconic program. The user of the iconic programming environment can move a mouse (Fig. 1) or other graphic input device to cause the start icon 202 to be highlighted. The start can be activated, by pressing one of the buttons typically located on a mouse, to cause a signal to be sent through the output nub 204 over a signal line 206 to an input nub 208 of a DO graphical object 210. The DO object 210 functions in a manner similar to DO loop or FOR loop in a conventional programming language. When a control signal is received on the control input 208 of the DO object 210, the object starts with a value of zero, shown in the top box inside the DO object, increments by value of 4.5, shown in the bottom box inside the DO object 210, until it reaches a value of 300, which is shown in the center box inside the DO object 210. For example, the initial value will be 0, the next value will be 4.5, the next value will be 9, etc., until a value of 300 is reached at which time the DO object 210 will stop cycling. When each new value is created, it is output on the output nub 212 and is sent over signal lines 214 and 216 to a sine object 218 and a cosine object 220 respectively. The sine object 218 takes a data value into its input nub 222, calculates the trigonometric sine of that value, and outputs the sine on its output nub 224. This data value is sent over network line 226 to the input nub 228 of an X-Y display 240. The cosine object 220 takes a data value into its input nub 230, calculates the trigonometric cosine of that value and outputs the cosine on its output nub 232 which is sent over network line 234 to a second input 236 of the X-Y display 240. The X-Y display 240 takes the data input on its two input nubs 228 and 236, and displays this data in an X/Y graphical format 242. Typically nubs on the left and right side of graphical objects represent data inputs and outputs respectively. Nubs on the top and bottom of graphical objects represent control inputs and outputs respectively. The combination of graphical objects or icons and the lines interconnecting these objects is called an iconic network.

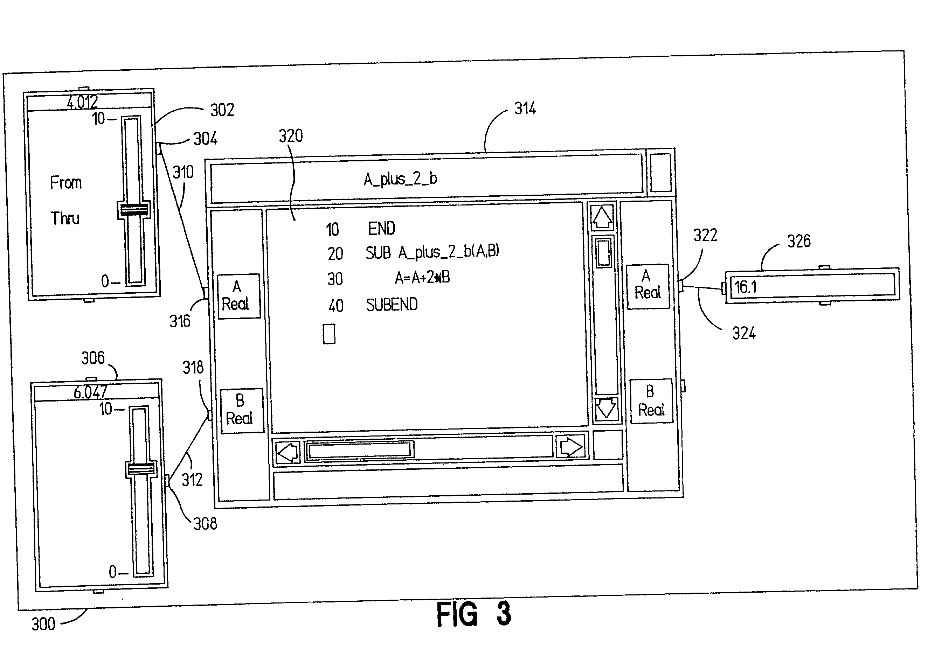

Fig. 3 shows an escape from the iconic programming environment to a non-iconic programming environment within the iconic process. Specifically, Fig. 3 shows an escape from the iconic programming environment into the instrument BASIC programming language. Referring now to Fig. 3, a screen display 300 shows a slide object 302. The slide object 302 shows a graphical image of a slide mechanism which is used to vary a data output 304 between a value of 0 and 10. As shown, the slide object 302 has the slide set a value of 4.012. A second slide object 306 is shown having its slide set to a value of 6.047. The output 304 of slide object 302 goes through network line 310 to the input 316 of an escape graphical object 314. The output 308 of the slide object 306 is sent through the network line 312 to an input 318 of the escape object 314. The escape object 314 shows a text window 320 which displays the source code of the instrument BASIC programming language. In this example, the instrument BASIC program is a program which takes two parameters A and B, and computes a result A by adding the original value of A to two times the original value of B. The iconic system creates two input nubs 316 and 318, one for each of the parameters A and B. When the instrument basic program shown in the window 320 receives the values for the parameters A and B, it computes the new value for A in the above described manner, and outputs this new value on an output nub 322. The output value at 322 is sent over the network line 324 to a numeric display 326 which displays the value for the output data.

In this example, the slide in the slide icon 302 is set to a value of 4.012, and this value is input to the escape icon 314 at the input nub 316 as the parameter A. The slide icon 306 is set to a value of 6.047 which is output on nub 308 and sent to the escape icon 314 for input on nub 318 as parameter B. The escape object 314, using the instrument BASIC program defined in the window 320 takes the parameter A, adds two times parameter B to its value and stores the new value of 16.1 into A. The new value of A is output on the output nub 322 which is sent to the numeric display 326 for visual display.

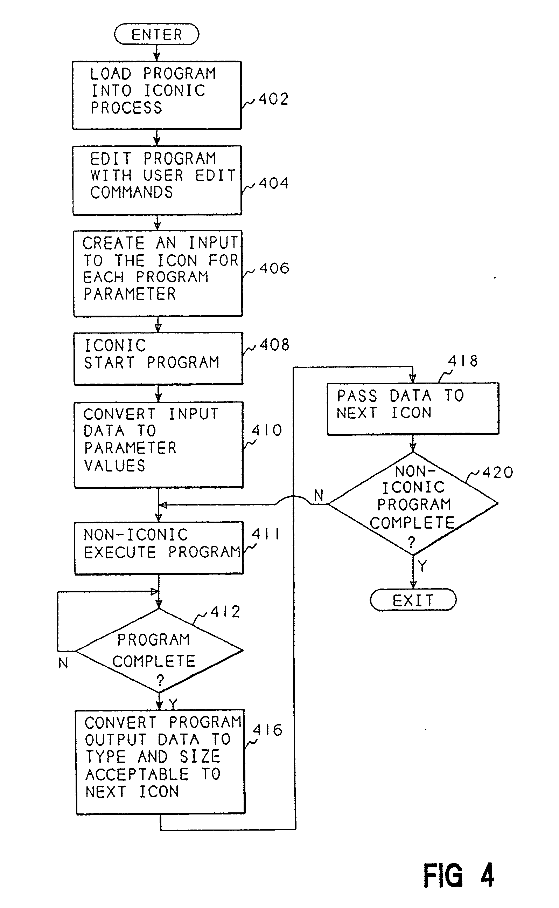

Fig. 4 is a flowchart of the method used by the iconic process for implementing the escape object to a non-iconic program, such as the program described in Fig. 3, within the same iconic process. Referring now to Fig. 4, after entry, block 402 loads the non-iconic program into the iconic process, and displays the source of the program within the window of the icon. The display of the program source, and the editing which will be described below, are not always possible, depending on the language used to implement the program. If the program has been pre-compiled, the source for the program may not be available and therefore not displayable or editable. When the source is available, block 404 allows the user to enter edit commands to change the program displayed in the window. It is also possible, in some instances, to dispense with the above described step 402 of loading a program, and allow a user to completely enter a new program with the edit block 404. After the program has been loaded and edited, block 406 creates an input to the escape icon for each program parameter. This was shown above with respect to Fig. 3 wherein two input nubs 316 and 318 were created for the parameters A and B respectively. After the input nubs are created for each of the program parameters, and the user has created the entire iconic network, block 408 starts execution of the iconic network upon user request. As data is passed to the input nubs of the escape icon, block 410 converts the input data into the data type and size requirements for the parameter values and passes this data to the program.

One of the options available to the user of the iconic programming environment is to wait for the program within the escape object to completely execute before continuing with the next icon in the network. If this option is elected, no data will be output from the escape object until the program has completely executed and terminated. If the user elects not to wait for program completion, however, the program within the escape object decides when data will be output. In this instance, when data is output from the escape object,the iconic process stops execution of the non-iconic program, converts and passes the output data to the next object in the network, and executes all subsequent objects in the network. After completion of all the other objects in the network that are connected to that output, control returns to the program in the escape object at the next instruction after outputting the data. The program then continues execution until more data is output, or until the program terminates. When either the program outputs additional data or terminates, the iconic process then executes all other icons in the network.

If the user has elected to wait for program completion, block 412 will loop until the program has completed. Once the program has completed, or when data is output from the escape icon, block 416 converts this program data output to a type and size acceptable to the next icon in the iconic network. Block 418 then passes this data to the next icon for execution. After the next and subsequent icons have been executed, block 420 then determines whether the program in the escape object has completely executed. If the program has not completed, block 420 returns to block 411 to continue execution of the program. If the program has completed, block 420 exits.

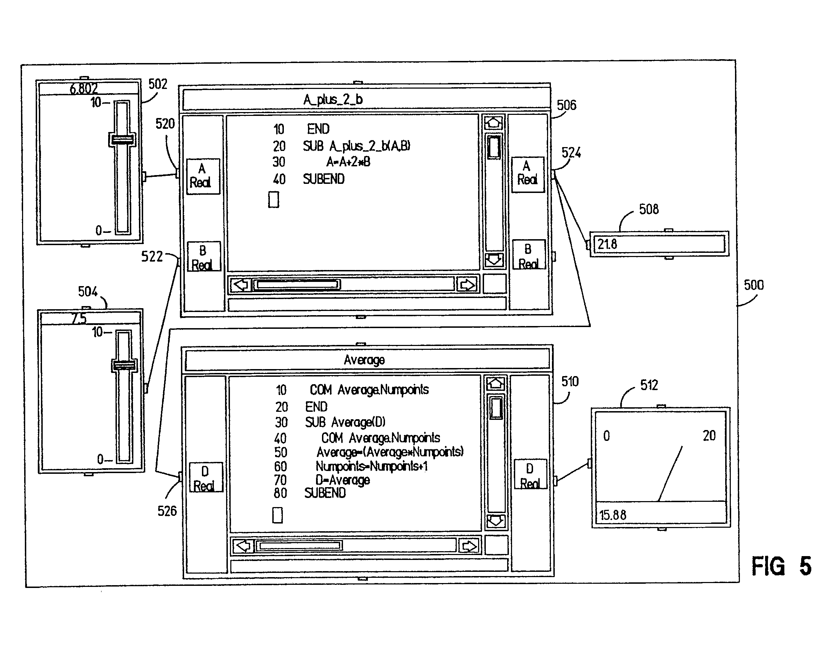

Fig. 5 shows a graphics display of an iconic network containing two escape objects. The iconic process of the present invention allows a plurality of non-iconic escape objects within an iconic network. Referring now to Fig. 5, a graphics display 500 shows a pair of slide objects 502 and 504 whose outputs are sent to a pair of inputs 520 and 522 of an escape object 506. The escape object 506 contains a program in the instrument basic programming language. The output 524 of the escape object 506 is sent to a numerical display 508 and is also sent to an input 526 of a second escape object 510. This second escape object 510 contains a program also written in the instrument basic programming language. The output of the second escape object 510 is sent to a meter object 512 which displays a value on the graphic screen in a manner similar to an electronic current or voltage meter. When the iconic network of Fig. 5 is started, the values from the two slide icons 502 and 504 will be converted into data values for use within parameters A and B of the instrument basic program in the escape object 506. The program in the escape object 506 will compute an output value which is the sum of the A input and two times the B input. This output value is sent to the meter display 508 and is also sent to the input 526 of the second escape object 510. The escape object 510 takes the input value 526 and converts it to a value suitable for the parameter D in the program within the escape object 510. After this program is executed by the iconic process, its output is sent to a meter display 512 which displays the value in a graphics form. In this manner, a plurality of escape objects can be included in any particular iconic network.

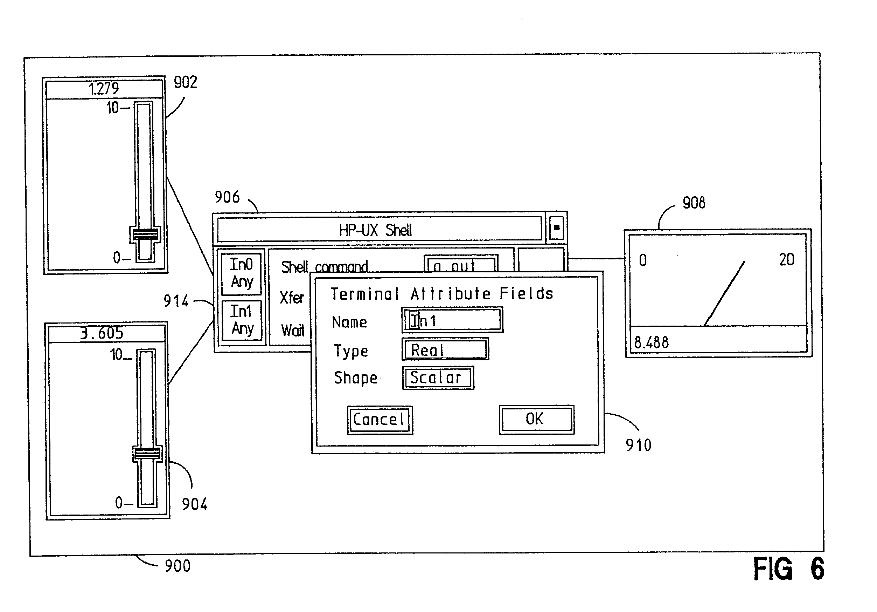

Fig. 6 shows an escape to a program in a separate process within the same operating system. The operating system shown in this example, is the HP-UX Multi-tasking operating system, which is similar to the UNIX (UNIX is a registered trademark of AT&T Corporation) operating system. The present invention is not restricted to HP-UX or the UNIX operating systems, but is usable with any multi-tasking operating system. Referring now to Fig. 6, a graphical display 600 shows a pair of slide objects 602 and 604 whose outputs are passed to inputs of an escape object 606. The output of the escape object 606 is sent to the input of a meter object 608. In this example, the escape object 606 is an escape to a separate process within the HP-UX operating system environment. When processing the shell escape 606, the iconic process of the present invention will create a separate HP-UX process and cause that process to execute a command specified by the Shell command parameter, in this example the command to be executed is the command "a.out". Data from the two inputs 610 and 612 will be converted to an ASCII string, as defined by the Xfer format parameter of the escape object 606, and sent to the standard input of the child process. In the HP-UX and UNIX operating systems, the standard input is called STDIN, and each process has its own STDIN. The standard output from each process is called STDOUT. The "Wait for death" parameter shown in the escape object 606 will cause the iconic process to wait for the completion of the child process before processing any data received from the child process. Data received from the child process STDOUT, will be converted to a type and size acceptable to the meter object 608 before being sent to the meter object 608.

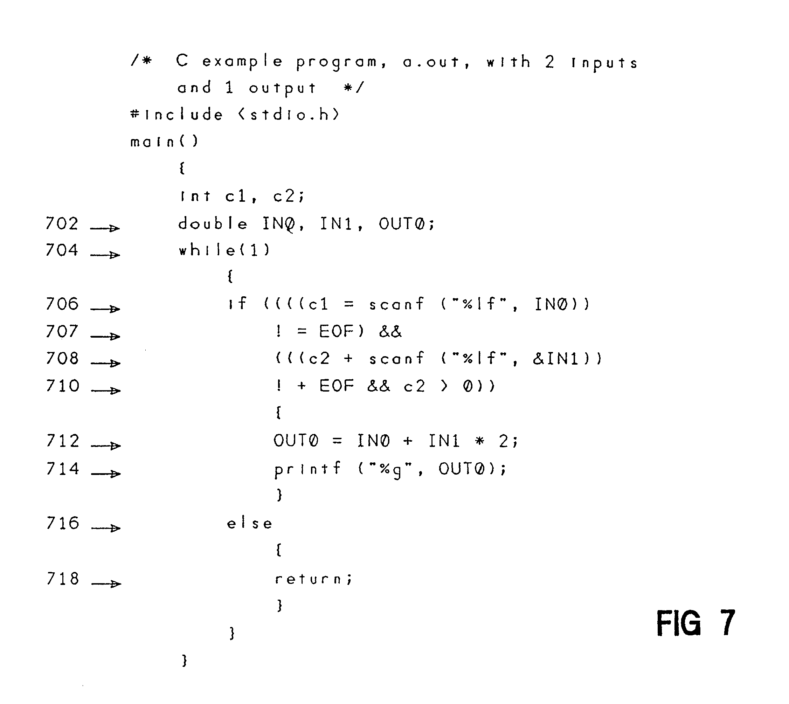

Fig. 7 shows the program source code for the a.out program of the child process. This program is written in the C programming language. Referring now to Fig. 7, line 702 allocates memory space for three double precision values, IN0, IN1, and OUT0. Line 704 starts a loop that will continue until end of file is reached on the standard input file (STDIN). Line 706 is an IF statement that will read the value for IN0 from STDIN, and convert it from ASCII input to a floating point value before storing the number into IN0. Line 708 reads the value for IN1 from STDIN, and converts it to floating point before storing it into IN1. Provided that data is available on STDIN, and the IF statement of lines 706 through 710 does not detect end-of-file, line 712 will compute the value of OUT0, which is IN0 plus two times IN1. After computing the value for OUT0, the PRINTF statement of line 714 will convert OUT0 from a floating point value to an ASCII string and send it back to the iconic process via STDOUT. When the IF statement of lines 706 through 710 detects end-of-file on STDIN, the ELSE statement of 716 will cause the return statement 718 to end execution of the child process.

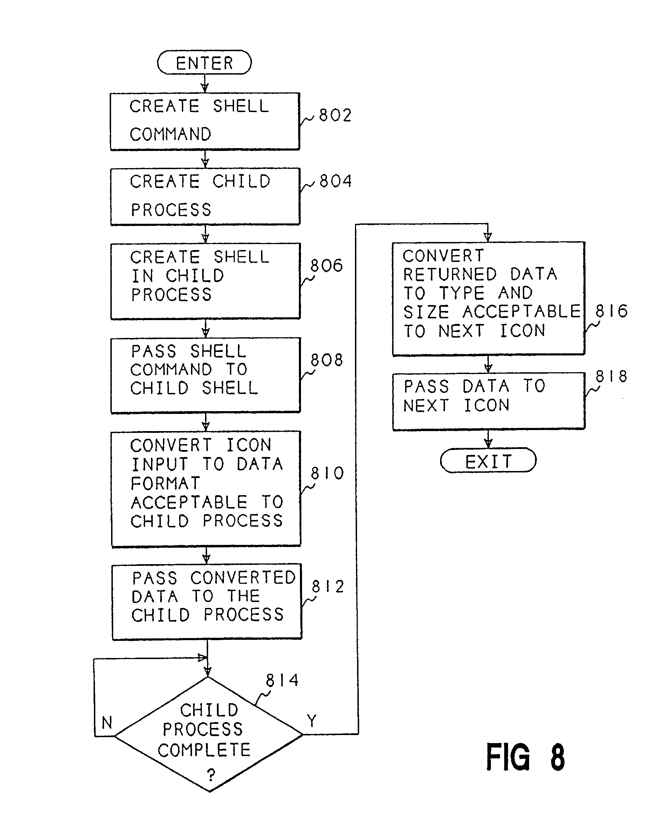

Fig. 8 is a flowchart showing the method by which the iconic process escapes to separate process within the same operating system environment. Referring now to Fig. 8, after entry, block 802 creates a shell command which will be passed to the child process. Block 804 then creates the child process and block 806 creates a shell program within the child process. Block 808 then passes the shell command created in block 802 to the shell program within the child process, which causes the child process to execute a desired program. Block 810 then converts input data, which is being input to the escape object, into a format which is acceptable to the child process. As described earlier, this data format is typically an ASCII string or a binary bit string. Block 812 then passes the converted data to the STDIN input of the child process. Block 814 waits for the child process to complete and after the process is complete block 816 converts data returned from the child process to a type and size acceptable to the next icon in the iconic network. Block 818 then passes this data to the next icon.

As described above with respect to Fig. 4, at the user's option, the iconic process may wait for completion of the other process before receiving data, or the iconic process may allow the other process to remain active.

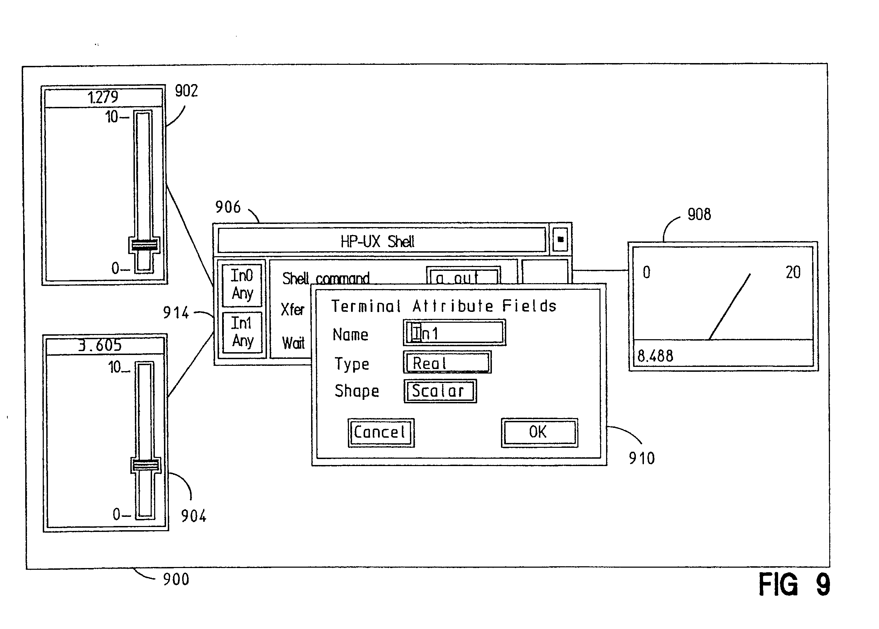

Fig. 9 shows the iconic network of Fig. 6, with menus for specifying the data type and format of one of the input fields. Referring now to Fig. 9, display 900 shows a pair of slide objects 902 and 904 connected to inputs of an escape object 906. The output of the escape object 906 is connected to a meter object 908. Menu 910 is used to specify the data type and format of the input IN1 914.

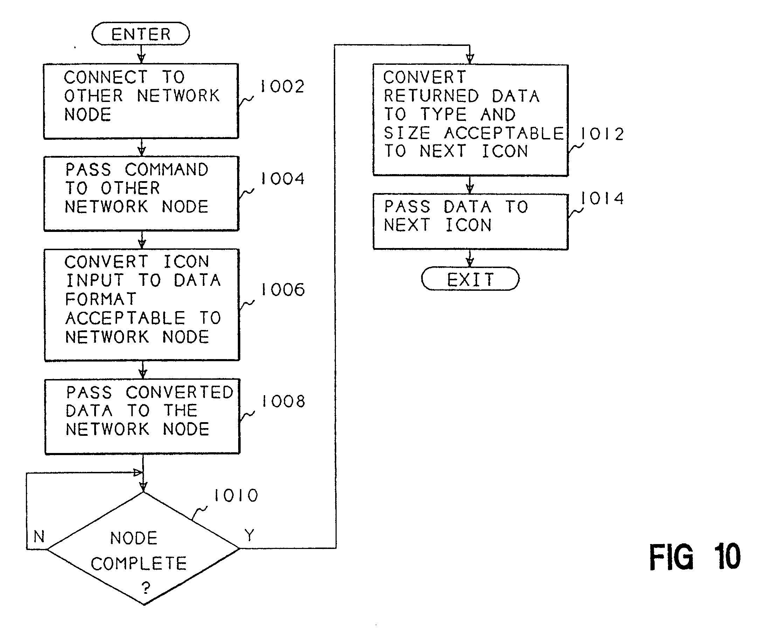

Fig. 10 is a flowchart showing the method by which the iconic process escapes to a program in a separate process possibly within a separate machine and operating system environment. Referring now to Fig. 10, after entry, block 1002 connects through a local area network, for example an Ethernet, to a node in another machine. Block 1004 then passes a command to the node to cause a specified program to be executed. Block 1006 then converts input data, which is being input to the escape object, into a format which is acceptable to the node in the other machine. As described earlier, this data format is typically an ASCII string or a binary bit string. Block 1008 then passes the converted data to the network input connector or the STDIN input of the other node. Block 1010 waits for the other node to complete and after the process is complete block 1012 converts data returned from the other node to a type and size acceptable to the next icon in the iconic network. Block 1014 then passes this data to the next icon.

As described above with respect to Figs. 4 and 8, at the user's option, the iconic process may wait for completion of the other node before receiving data, or the iconic process may allow the other process to remain active.

Having thus described a presently preferred embodiment of the present invention, it will now be appreciated that the objects of the invention have been fully achieved, and it will be understood by those skilled in the art that many changes in construction and circuitry and widely differing embodiments and applications of the invention will suggest themselves without departing from the spirit and scope of the present invention. The disclosures and the description herein are intended to be illustrative and are not in any sense limiting of the invention, more preferably defined in scope by the following claims.

**Claims**

1.  In an iconic programming system process (122) executing in an operating environment (114), a method for transferring control to, and exchanging data with, a second process within said operating environment, said method comprising the steps of:

    (a) creating said second process (804);

    (b) starting a desired program therein (808);

    (c) converting input data being transferred from said iconic process to said second process into a form acceptable to said second process (810);

    (d) transferring said converted input data to said second process (812);

    (e) accepting output data from said second process (816);

    (f) converting said output data into a form suitable for a next icon within said iconic system (816); and

    (g) transferring said converted output data to said next icon (818).

2.  The process of claim 1 wherein step (a) further comprises the step of:

    (a1) starting a command processing program in said second process (806).

3.  The process of claim 1 wherein step (d) further comprises the step of:

    (d1) waiting for completion of said second process (814).

4.  The process of claim 1 wherein steps (c) and (f) further comprises the steps of:

    (c1) accepting data definition input from a user of the iconic system process, said input being used to define the input data format for transfer to said second process (910); and

    (f1) accepting a second data definition input from the user of the iconic system process, said input being used to define the output data format size and data type constraints.

5.  The process of claim 1 wherein step (c) further comprises the step of:

(c2) concatenating data from a plurality of inputs prior to converting said input data.

6. In an iconic programming system process (122), a method for transferring control to a non-iconic program within the same process, said method comprising the steps of:

(a) loading said non-iconic program (402);

(b) starting said non-iconic program (411);

(c) converting each of a plurality of input data streams into a form acceptable to said non-iconic program (410);

(d) transferring each said plurality of converted input data streams to each of a plurality of parameters of said non-iconic program;

(e) accepting output data from said non-iconic program (416);

(f) converting said output data into a form suitable for a next icon within said iconic system process (416); and

(g) transferring said converted output data to said next icon (418).

7. The process of claim 6 wherein step (d) further comprises the step of:

(d1) waiting for completion of said non-iconic program (412).

8. The process of claim 6 wherein steps (c) and (f) further comprises the steps of:

(c1) accepting data definition input from a user of the iconic system process, said input being used to define the input data format for transfer to said non-iconic program (910); and

(f1) accepting a second data definition input from the user of the iconic system process, said input being used to define the output data format size and data type constraints.

9. The process of claim 6 wherein step (a) further comprises the step of:

(a1) accepting editing input from a user of the iconic system process, said input being used to create or modify program instructions for said non-iconic program (404).

10. The process of claim 6 further comprising the step of:

(h) repeating steps (a) through (g) for a plurality of non-iconic programs.

11. The process of claim 10 wherein step (h) further comprises the step of:

(h1) loading the same program code for two or more of said plurality of non-iconic programs.

12. The process of claim 11 wherein step (a) further comprises the step of:

(a1) accepting editing input from a user of the iconic system process, said input being used to create or modify non-iconic program instructions of said non-iconic programs, and wherein said editing input is used to edit all copies of the same non-iconic program concurrently.

13. the process of claim 6 further comprising the step of:

(i) continuing execution of said non-iconic program at a location following the location whereat said output data was transferred.

FIG 1

From 0
Thru 300
Step 4.5

Start

Y scale
0.2/div
AutoSc
Trace 1

XYY Display
NextTrace Clear
X scale
0.2/div

SIN(x)
COS(x)

FIG 2   PRIOR ART

FIG 3

ENTER

LOAD PROGRAM
INTO ICONIC
PROCESS — 402

EDIT PROGRAM
WITH USER EDIT
COMMANDS — 404

CREATE AN INPUT
TO THE ICON FOR — 406
EACH PROGRAM
PARAMETER

ICONIC — 408
START PROGRAM

PASS DATA TO — 418
NEXT ICON

CONVERT INPUT
DATA TO — 410
PARAMETER
VALUES

NON-
ICONIC — 420
PROGRAM
COMPLETE
?

N

NON-ICONIC — 411
EXECUTE PROGRAM

Y

EXIT

PROGRAM — 412
COMPLETE
?

N

Y

CONVERT PROGRAM
OUTPUT DATA TO — 416
TYPE AND SIZE
ACCEPTABLE TO
NEXT ICON

FIG 4

13

FIG 5

FIG 6

```
/*  C example program, a.out, with 2 inputs
    and 1 output  */
#include <stdio.h>
main()
    {
    int c1, c2;
    double IN0, IN1, OUT0;                          ← 702
    while(1)                                        ← 704
        {
        if ((((c1 = scanf ("%lf", IN0))             ← 706
            ! = EOF) &&                             ← 707
            (((c2 + scanf ("%lf", &IN1))            ← 708
            ! + EOF && c2 > 0))                     ← 710
            {
            OUT0 = IN0 + IN1 * 2;                   ← 712
            printf ("%g", OUT0);                    ← 714
            }
        else                                        ← 716
            {
            return;                                 ← 718
            }
        }
    }
```

**FIG 7**

ENTER

CREATE SHELL
COMMAND                      ~802

CREATE CHILD
PROCESS                      ~804

CREATE SHELL
IN CHILD                     806
PROCESS

PASS SHELL
COMMAND TO                   808
CHILD SHELL

CONVERT ICON
INPUT TO DATA
FORMAT                       810
ACCEPTABLE TO
CHILD PROCESS

PASS CONVERTED
DATA TO THE                  812
CHILD PROCESS

N    CHILD              814
     PROCESS        Y
     COMPLETE
     ?

CONVERT
RETURNED DATA
TO TYPE AND
SIZE ACCEPTABLE    816
TO NEXT ICON

PASS DATA TO       818
NEXT ICON

EXIT

# FIG 8

FIG 9

EP 0 443 768 A2

```
                    ( ENTER )

        ┌──────────────────┐                    ┌──────────────────┐
        │ CONNECT TO       │                    │ CONVERT          │
        │ OTHER NETWORK    │  1002              │ RETURNED DATA    │
        │ NODE             │                    │ TO TYPE AND      │
        └──────────────────┘                    │ SIZE ACCEPTABLE  │  1012
                 │                               │ TO NEXT ICON     │
        ┌──────────────────┐                    └──────────────────┘
        │ PASS COMMAND     │                             │
        │ TO OTHER         │  1004              ┌──────────────────┐
        │ NETWORK NODE     │                    │ PASS DATA TO     │  1014
        └──────────────────┘                    │ NEXT ICON        │
                 │                               └──────────────────┘
        ┌──────────────────┐                             │
        │ CONVERT ICON     │                         ( EXIT )
        │ INPUT TO DATA    │
        │ FORMAT           │  1006
        │ ACCEPTABLE TO    │
        │ NETWORK NODE     │
        └──────────────────┘
                 │
        ┌──────────────────┐
        │ PASS CONVERTED   │
        │ DATA TO THE      │  1008
        │ NETWORK NODE     │
        └──────────────────┘
                 │
               1010
         N  ╱   NODE   ╲  Y
          ◁  COMPLETE    ▷
            ╲    ?     ╱
```

FIG 10